# EUROPÄISCHE PATENTANMELDUNG

(11) **EP 1 707 827 A1**
(43) Veröffentlichungstag der Anmeldung: **04.10.2006**
(21) Anmeldenummer: 06005009.3
(22) Anmeldetag: 11.03.2006
(51) Int. Cl.: F16B 35/00, B21K 1/56, B21C 37/04

(54) **Verfahren zur Herstellung eines Befestigungselements sowie Befestigungselement, insbesondere Schraube**

(30) Priorität: 31.03.2005 DE 102005014606
(71) Anmelder: Richard Bergner Verbindungstechnik GmbH & Co KG, 99124 Schwabach (DE)
(72) Erfinder: Heinrich, Frank, 91056 Erlangen (DE)
(74) Vertreter: Tergau & Pohl Patentanwälte

(57) **Zusammenfassung**

Zur Herstellung insbesondere einer hochfesten Aluminium-Schraube (2) wird ein bereits auf eine hohe Festigkeit ausgehärteter Draht (4) als Ausgangsprodukt herangezogen. Von diesem wird ein Rohling (8) abgetrennt, welcher durch anschließende Kaltumformung ohne weitere Wärmebehandlung in die gewünschte Endform der Schraube (2) gebracht wird. Da bereits der Draht (4) in einen hoch- und höchstfesten Zustand überführt wurde, wird durch die zusätzliche Kaltumformung und den Verzicht auf eine weitergehende Wärmebehandlung eine zusätzliche Festigkeitssteigerung erreicht, so dass sich verbesserte mechanische Festigkeitswerte erzielen lassen.

## Beschreibung

Die Erfindung betrifft ein Verfahren zur Herstellung eines Befestigungselements, insbesondere eine Aluminium-Schraube, sowie ein Befestigungselement.

Insbesondere im Automobilbau werden im Zusammenhang mit Leichtbau-Maßnahmen zusehends auch Befestigungselemente aus Leichtmetall eingesetzt. Unter Leichtmetall werden hierbei Aluminium- und Magnesiummetalle sowie Aluminium- und Magnesium-Legierungen verstanden.

Die mechanischen Eigenschaften eines Materials sind entscheidend für die Eignung als Befestigungsmittel, um die im eingesetzten Zustand auftretenden Belastungen bei der Verbindung mehrerer Bauteile miteinander aufnehmen zu können. Wichtige mechanische Kennwerte hierzu sind die mittlere Zugfestigkeit Rm, die Streckgrenze Rp 0,2 (auch als 0,2%-Dehngrenze bezeichnet) sowie die Bruchdehnung. Unter Zugfestigkeit wird allgemein die im Zugversuch maximal erreichte Spannung bezeichnet. Die mittlere Zugfestigkeit ist die über mehrere Zugversuche verschiedener Proben gemittelte Zugfestigkeit. Die Streck- oder Dehngrenze Rp 0,2 gibt diejenige mechanische (Zug-)Spannung an, bei der die auf die Anfangslänge der Probe bezogene bleibende Dehnung nach Entlastung genau 0,2% beträgt. Die Einheit sowohl für die Zugfestigkeit als auch die Streckgrenze ist N/mm² oder MPa. Die Bruchdehnung gibt an, um wie viel - bezogen auf die Ausgangslänge einer Probe - sich ein Material plastisch dehnen lässt, bevor es zum Bruch kommt. Die Bruchdehnung A = δL/L ist also die auf die Anfangslänge L einer Probe im Zugversuch bezogene bleibende Längenänderung δL nach erfolgtem Bruch. Die mechanischen Kennwerte von Schrauben werden insbesondere nach der DIN ISO 898-1 bestimmt.

Maßgebenden Einfluss auf die mechanischen Eigenschaften eines Materials nimmt der Herstellungsprozess beginnend von der Schmelze bis zur fertigen Schraube. Bei der Herstellung von hochfesten Aluminiumschrauben wird üblicherweise ein Rohdraht, beispielsweise ein so genannter Gießwalzdraht oder ein Pressdraht verwendet. Beim Gießwalzdraht wird die Legierungsschmelze über verschiedene Reinigungsstufen in eine umlaufende Rinne eines so genannten Gießwalzrads abgegossen. Während sich das (gekühlte) Gießwalzrad dreht, erstarrt die Schmelze und wird anschließend im erstarrten aber noch weichen Zustand direkt einer Warmwalzstrecke zugeführt. In dieser wird der abgegossene Draht über mehrere Stufen in einen Rohdraht mit annähernd rundem Querschnitt umgearbeitet. Der als Gießwalzdraht oder auch als Pressdraht hergestellte Rohdraht wird anschließend in einer Drahtzieherei durch Zieh- und Glühoperationen auf einen gewünschten Enddurchmesser gebracht. Während der Glühoperationen erfolgt hierbei ein so genanntes Weichglühen des Drahtes, so dass dieser vergleichsweise geringe Festigkeitswerte hat, damit er sich kalt umformen lässt.

Von diesem auf den gewünschten Enddurchmesser gezogenen und weichgeglühten Rohdraht wird anschließend ein Rohling gewünschter Länge abgetrennt. Durch einen Kaltumformprozess wird an diesem ein Schaft- sowie ein Kopfbereich ausgebildet. Durch einen Walzprozess wird schließlich noch das Gewinde am Schaft erzeugt. Um die gewünschte Endfestigkeit der Schraube zu erreichen, wird vor oder auch nach dem Gewindewalzen das Material in einen hoch- und höchstfesten Zustand überführt. Üblicherweise werden die Schrauben hierbei in den hochfesten "T6"- oder "T7x"-Zustand gemäß DIN EN515 überführt. Dies geschieht durch mehrere Wärme-Behandlungsschritte, insbesondere durch eine Abfolge aus Lösungsglühen, Abschrecken und Auslagern bei erhöhter Temperatur. Der T6-Zustand ist hierbei der Zustand, bei dem das Material seine höchste Festigkeit erreicht. Der T7x-Zustand ist ein so genannter "überalteter" oder überhärteter Zustand, bei dem die Festigkeit bereits wieder etwas verringert, jedoch eine verbesserte Korrosionsbeständigkeit erreicht ist.

Für hochfeste Al-Befestigungselemente (hierunter werden allgemein Befestigungselemente aus Aluminium oder einer Aluminiumlegierung verstanden) haben sich Al-Legierungen der 6000er Reihe gemäß DIN EN 537-3 als geeignet herausgestellt. Diese Legierungen zeichnen sich dadurch aus, dass sie Aluminium, Magnesium und Silizium enthalten. Als besonders geeignet für hochfeste Aluminium-Schrauben hat sich die AI-Legierung 6056 herausgestellt. Hieraus hergestellte Schrauben mit metrischem Gewinde weisen typischerweise eine mittlere Zugfestigkeit Rm im Bereich zwischen 400 und 450 MPa, eine Dehnungsgrenze Rp 0,2 zwischen 350 und 400 MPa sowie eine Bruchdehnung von etwa 8 bis 12% auf.

Allgemeine Grundlagen zur Wärmebehandlung von Aluminiumlegierungen sind beispielsweise aus "Aluminium Taschenbuch 1 - Grundlagen und Werkstoffe", 16. Auflage, von Dr. Catrin Kammer, erschienen im Aluminium-Verlag Düsseldorf, 2002, zu entnehmen.

Der Erfindung liegt die Aufgabe zugrunde, die Bereitstellung eines Befestigungselements, insbesondere aus Leichtmetall, mit verbesserten mechanischen Eigenschaften zu ermöglichen.

Die Aufgabe wird gemäß der Erfindung gelöst durch ein Verfahren zur Herstellung eines Befestigungselements, bevorzugt eine Schraube, bei dem von einem bereits auf eine hohe Festigkeit ausgehärteten Draht ein Rohling abgetrennt wird, welcher durch anschließende Kaltumformung und ohne weitere Wärmebehandlung in die gewünschte Endform gebracht wird.

Ein wesentlicher Gesichtspunkt dieses Verfahrens ist darin zu sehen, dass im Anschluss an die Kaltumformung zur Ausbildung des Schafts keine Wärmebehandlung mehr erfolgt. Vielmehr wird bereits ein Draht mit hoher Festigkeit eingesetzt. Diesem Vorgehen liegt die Überlegung zugrunde, dass durch die Kaltumformung eine zusätzliche Kaltverfestigung erzielt wird, die aufgrund des gewählten Herstellungsprozesses ohne nachfolgende Wärmebehandlung verbleibt. Bei der Kaltumformung werden Kristallstreckungen , so genannte Texturen, im Materialgefüge erzeugt. Mit diesem Verfahren hergestellte Befestigungselemente weisen gegenüber Befestigungselementen, die nach dem Stand der Technik hergestellt sind, verbesserte mechanische Eigenschaften, insbesondere eine erhöhte Zugfestigkeit sowie eine erhöhte Dehngrenze auf.

Zweckdienlicherweise wird zur Herstellung eines Leichtmetall-Befestigungselements ein Draht aus einer aushärtbaren Al-Legierung verwendet. Insbesondere eine Legierung der 6000er Reihe und vorzugsweise die Al-Legierung 6056.

Um eine möglichst hohe Festigkeit zu erreichen, wird der Draht, insbesondere der gezogene Rohdraht, durch geeignete Wärmebehandlung in den hochfesten Zustand überführt. Dies ist insbesondere der T6- oder T7x-Zustand. Bei der Überführung in den T6-Zustand wird daher bei diesem Verfahren der Draht bereits vor dem Abtrennen des Rohlings auf seine maximale Festigkeit ausgehärtet.

Da der bereits ausgehärtete Draht im Vergleich zu einem weichgeglühten oder weichen Draht spröde ist, ist die Kaltumformung zur Ausbildung des Befestigungselements zunächst erschwert. Um eine sichere und zuverlässige Kaltumformung mit hohen Umformgraden zu gewährleisten, ist daher gemäß einer zweckdienlichen Weiterbildung vorgesehen, dass ein Draht mit einem feinen Gefüge verwendet wird, welches eine mittlere Korngröße von < 200 µm und insbesondere < 100 µm aufweist. Unter mittlerer Korngröße wird hierbei das statistische Mittel der Korngrößenverteilung verstanden. Hierbei weist das Gefüge insgesamt eine sehr homogene Korngrößenverteilung auf, d.h. die Abweichung von der mittleren Korngröße ist gering.

Um dieses Gefüge zu erreichen, ist bei der Herstellung des Drahts aus dem Rohdraht zweckdienlicherweise vorgesehen, dass im Anschluss an eine jeweilige Ziehoperation der gezogene Draht jeweils einem Rekristallisationsglühen unterzogen wird. Das Ziehen mit anschließendem Rekristallisationsglühen wird vorzugsweise wiederholt, insbesondere etwa zwei bis dreimal. Beim Rekristallisationsglühen tritt nach der vorausgegangenen Verformung eine Kornneubildung ein. Durch das insbesondere mehrfache Glühen wird das feine Gefüge erhalten.

Zweckdienlicherweise wird hierbei beim Rekristallisationsglühen eine Glühtemperatur von 300 bis 500 °C und insbesondere von 380 bis 420 °C eingestellt. Beim Ziehen des Drahts wird hierbei der Drahtdurchmesser insgesamt beispielsweise um 20 bis 40 % - bezogen auf den ursprünglichen Rohdraht-Durchmesser - verringert.

Bevorzugt wird der Draht erst nach dem Ziehen auf den gewünschten Durchmesser durch weitere Wärmebehandlung in den Zustand mit hoher und höchster Festigkeit überführt, d.h. er wird in sich bekannter Weise in den T6- oder T7x-Zustand überführt. Hierzu wird der gezogene Draht einem Lösungsglühen mit Abschreckung und anschließender Auslagerung bei erhöhter Temperatur unterzogen

Aus diesem ausgehärteten Draht wird durch Ablängen, insbesondere Abscheren, der Rohling erhalten, aus dem dann die Schraube mit dem Schaft und dem Kopf durch die Kaltumformung erzeugt wird. Bei der Kaltumformung erfolgt hierbei eine zusätzliche Kaltverfestigung. Um hier eine möglichst hohe Kaltverfestigung zu erreichen und gleichzeitig zu gewährleisten, dass der Rohling nicht bricht, wird der Durchmesser des Rohlings zur Ausbildung des Schafts entsprechend einen Umformungsgrad im Bereich von 50 bis 120 % verringert. Unter Umformungsgrad wird allgemein der natürliche Logarithmus des Verhältnisses des Ausgangsdurchmesser im Quadrat zum Enddurchmesser im Quadrat verstanden.

Um einen möglichst hohen Umformgrad und damit eine möglichst maximale Festigkeitssteigerung zu erreichen, wird der Schaft vorzugsweise durch Fließpressen ausgebildet. Beim Fließpressen wird der Teil des Rohlings, welcher zur Ausbildung des Schafts vorgesehen ist, komplett vom Umformwerkzeug eingeschlossen. Durch diese Maßnahme wird das Auftreten von Zugspannungen im Rohling und am Umfang des Rohlingsvermindert bzw. gering gehalten. Derartige Zugspannungen würden nämlich unter Umständen zu einem Versagen des hochfesten und spröden Bauteils führen.

Anschließend wird zweckdienlicherweise zur Ausbildung einer Schraube noch ein Gewinde durch einen Walzvorgang auf den Schaft aufgebracht.

Das Verfahren ist nicht auf die Herstellung von Schrauben beschränkt. Es bietet sich vielmehr allgemein zur Herstellung bolzenförmiger Befestigungselemente an, bei denen das Befestigungselement aus einem abgelängten Rohdraht durch Kaltumformung hergestellt wird. Aufgrund des gewählten Herstellungsverfahrens mit der Verwendung eines bereits hochfesten (gezogenen) Rohdrahts und der anschließenden Festigkeitssteigerung durch Kaltumformung lassen sich allgemein Befestigungselemente insbesondere aus aushärtbaren Leichtmetall-Legierungen mit vergleichsweise besseren mechanischen Eigenschaften erhalten. Insbesondere eignet sich dieses Verfahren zur Herstellung bolzenförmiger Befestigungselemente, deren Länge ein Mehrfaches ihres Durchmessers beträgt.

Die Aufgabe wird gemäß der Erfindung weiterhin gelöst durch ein Befestigungselement mit einem Schaft, insbesondere eine Schraube, das insbesondere nach dem oben beschriebenen Verfahren hergestellt wurde. Das Befestigungselement weist hierbei ein Materialgefüge auf, welches im Bereich des Schafts sich in Längsrichtung des Schafts erstreckende Kristallstreckungen, so genannte Texturen, aufweist.

Aufgrund des gewählten Herstellungsprozesses der Kaltverfestigung als letzten Arbeitsschritt ohne nachfolgende Wärmebehandlung verbleiben die bei der Kaltumformung eingebrachten Gefügeveränderungen bestehen und sind daher bei der fertigen Schraube als solche zu erkennen. Wegen der üblicherweise deutlichen Querschnittsreduzierung des Schafts und des hohen Umformgrads erfolgt eine Längsdehnung. Hierdurch wird das ursprünglich feine, homogene Gefüge in Längsrichtung des Schafts deutlich gestreckt. Insbesondere ist das Verhältnis der Längsausdehnung zur Querausdehnung dieser Längstexturen > 3 und insbesondere > 5 und darüber. Im Vergleich zu dem mittleren Korndurchmesser des ursprünglichen feinen und homogenen Gefüges werden daher Gefügestrukturen ausgebildet, deren Längsstreckung ein Vielfaches der mittleren Korngröße beträgt.

Zweckdienlicherweise besteht die Schraube hierbei aus einer Aluminium-Legierung, insbesondere aus der Legierung Al-6056. Die Schraube weist bevorzugt eine mittlere Festigkeit Rm im Bereich von 500 bis 600 MPa auf. Weiterhin ist die Schraube vorzugsweise dadurch charakterisiert, dass sie eine 0,2%-Dehngrenze (Streckgrenze) Rp 0,2 im Bereich von 450 bis 550 MPa aufweist.

Ausführungsbeispiele der Erfindung werden im Folgenden anhand der Zeichnung näher erläutert. Es zeigen:

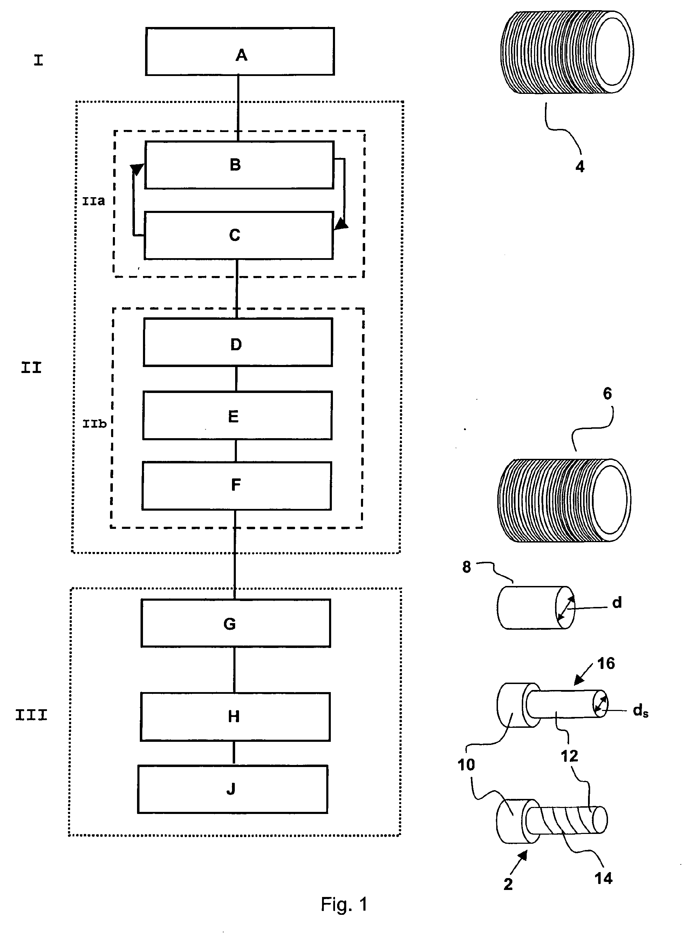

- Fig. 1: eine Blockbilddarstellung zur Illustration des Herstellungsprozesses,
- Fig. 2a: ein Gefüge einer gemäß dem neuen Verfahren hergestellten hochfesten Aluminiumschraube in 50-facher Vergrößerung,
- Fig. 2b: das Gefüge gemäß Fig. 2a in einer 100-fachen Vergrößerung,
- Fig. 3a: ein Gefüge einer nach dem Stand der Technik hergestellten hochfesten Aluminiumschraube in 50-facher Vergrößerung sowie
- Fig. 3b: das Gefüge nach Fig. 3a in 100-facher Vergrößerung.

Die Herstellung einer Schraube 2, allgemein eines bolzenförmigen Befestigungselements, lässt sich prinzipiell in drei Herstellungsabschnitte I - III unterteilen, wobei im Herstellungsabschnitt I ein Rohdraht 4 erzeugt wird (Verfahrensschritt A), aus dem im Herstellungsschritt II ein auf den gewünschten Durchmesser gezogener und verfestigter oder ausgehärteter Draht 6 hergestellt wird. Der Rohdraht 4 ist insbesondere ein Gießwalzdraht, welcher als "Endlos-Ware" hergestellt wird und üblicherweise als konfektionierte Einheit auf Trommeln oder Rollen aufgewickelt wird.

Im Herstellungsschritt III wird vom Draht 6 ein Rohling 8 der gewünschten Länge abgetrennt, welcher durch Kaltumformprozesse zur Schraube 2 fertiggestellt wird. Diese weist einen Kopf 10 sowie einen Schaft 12 mit einem darauf angebrachten Gewinde 14 auf.

Als Ausgangsmaterial für den Rohdraht 4 wird eine Aluminiumlegierung der 6000er Reihe, insbesondere die Aluminiumlegierung 6056 verwendet. Aus diesem Material wird im Verfahrensschritt A in einem Gießwalzverfahren der Rohdraht 4 erzeugt. Dieser wird im Zwischenabschnitt IIa auf einen gewünschten Durchmesser d des Rohlings 8 gezogen. Im daran anschließenden Zwischenabschnitt IIb wird der gezogene Rohdraht 4 durch Wärmebehandlung in einen hochfesten Zustand, insbesondere in den T6-Zustand überführt.

Im Zwischenabschnitt IIa wird der Rohdraht 4 in einer Drahtzieherei durch eine Ziehoperation B mit anschließender Rekristallisation C auf den gewünschten Durchmesser d gebracht. Hierbei erfolgt insbesondere ein mehrfaches, etwa zweibis dreifaches Ziehen B mit jeweils anschließendem Rekristallisieren C, um sukzessive den Durchmesser d zu erreichen und hierbei jeweils die mittlere Korngröße zu verringern. Durch die Rekristallisation C werden die bei der Verformung eingebrachten Verfestigungen und Gefügeumbildungen wieder rückgängig gemacht und es wird ein insgesamt sehr feines und homogenes Gefüge ausgebildet. Der mittlere Korndurchmesser des Gefüges liegt hierbei vorzugsweise unter 100 µm. Dieses feine und homogene Gefüge wird durch die mehrfache Zieh- und Rekristallisations-Operation B,C erzielt.

Der nunmehr gezogene Rohdraht 4 wird anschließend im Zwischenabschnitt II b einem Lösungsglühen D mit anschließender Abschreckung E und Auslagerung F bei erhöhter Temperatur oberhalb der Raumtemperatur unterzogen und hierdurch in den T6-Zustand überführt. Am Ende des Aushärtprozesses gemäß Verfahrenszwischenabschnitt IIb liegt der Rohdraht 4 nunmehr als aufbereiteter Draht 6 mit hoher Festigkeit vor. Die mittlere Festigkeit dieses Drahtes 6 liegt vorzugsweise im Bereich von etwa 400 - 440 MPa.

Aus dem Draht 6 wird durch Ablängen G der Rohling 8 hergestellt. Aus diesem wird durch einen Kaltumformprozess H zunächst ein Schraubenrohling 16 ausgebildet. Hierzu wird der Schaft 12 durch ein Fließpressen auf den gewünschtren Schaftdurchmesser dₛ gebracht. Im Bereich des Schafts 12 erfolgt hier eine Umformung mit einem Umformgrad im Bereich von 50 -120%. Der Umformungsgrad ist definiert als In (d²/ds²). Bei dieser Kaltumformung erfolgt eine zusätzliche Kaltverfestigung des bereits hochfesten Rohlings 8. Schließlich wird im letzten Verfahrensschritt J das Gewinde 14 durch einen Walzprozess aufgebracht.

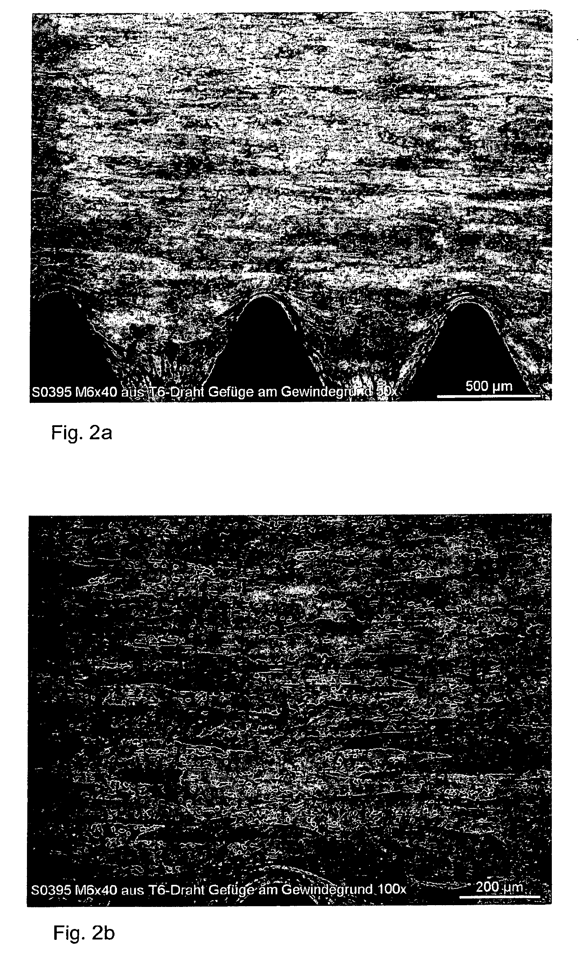

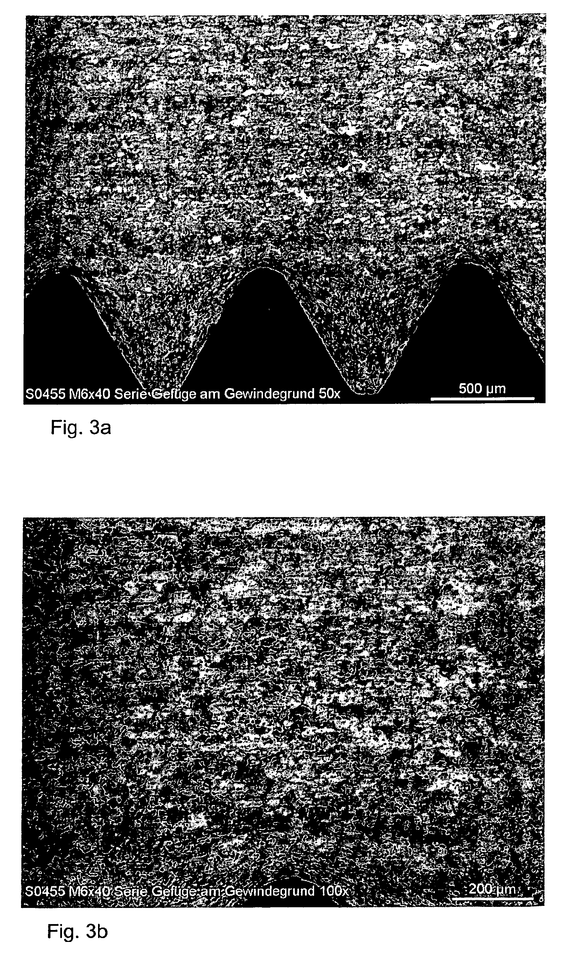

Da im Anschluss an die Kaltverfestigung keine Wärmebehandlung mehr erfolgt, bleiben die durch die Kaltverfestigung erzeugten Strukturen in der Schraube 2 bestehen. Dies führt im Vergleich zu Schrauben, die nach herkömmlichen Verfahren ausgebildet sind, zu erheblichen Unterschieden im resultierenden Gefüge der Schraube. Dies ist in den Fig. 2a,2b sowie 3a,3b zu erkennen. Die Fig. 2a,2b zeigen mit unterschiedlichen Vergrößerungen Längsschnitte durch eine Schraube, die gemäß dem neuen Verfahren aus einem Gießwalzdraht der Legierung AL 6056 hergestellt ist. Die Figuren zeigen Ausschnitte im Bereich des Gewindes 14. Es wurde jeweils eine M6x40-Schraube untersucht. Die Abbildungen 2a,3a wurden jeweils mit einer 50-fachen Vergrößerung und die Abbildungen 2b,3b mit einer 100-fachen Vergrößerung aufgenommen. Wie aus einer Gegenüberstellung der miteinander korrespondierenden Fig. 2a-3a bzw. 2b-3b unmittelbar erkennbar ist, weist die gemäß dem neuen Verfahren aus dem vorverfestigten Draht hergestellte Schraube 2 deutlich zu erkennende Längstexturen auf. Unter Längstexturen werden hierbei Strukturen verstanden, die sich in Längsrichtung des Schraubenschafts erstrecken und gebildet sind durch Gefügeumstrukturierungen aufgrund der Kaltverformung. Wie aus den Fig. 2a,2b zu entnehmen ist, weisen diese Texturen eine Längserstreckung von teilweise über 500µm auf. Im Unterschied hierzu zeichnet sich die Gefügestruktur gemäß den Fig. 3a,3b durch eine hohe Homogenität ohne oder allenfalls geringe Vorzugsrichtung aus. Lediglich im Bereich des Gewindegrundes des Gewindes 14 sind durch das Gewindewalzen eingebrachte Texturen erkennbar.

Mit dem neuen Verfahren lassen sich daher Befestigungselemente, insbesondere Schrauben 2, mit verbesserten mechanischen Eigenschaften erzielen. Eine derart hergestellte Schraube 2 weist - im Vergleich zu einer Schraube, welche herkömmlich hergestellt wurde - eine Steigerung der Zugfestigkeit Rm von über 20% und eine Steigerung der Dehngrenze Rp 0,2 von etwa 30% bei nur unwesentlich verminderter Bruchdehnung auf. Neben diesen deutlichen Vorteilen im Hinblick auf die mechanischen Eigenschaften ist bei dem neuen Verfahren auch eine deutlich einfachere und kostengünstigere Herstellung erreicht, da die Verfestigung, d.h. die notwendige Wärmebehandlung zur Überführung in den T6-Zustand, am endlosen Rohdraht 4 vorgenommen wird. Bisher wurde die Wärmebehandlung erst bei der fertiggestellten Schraube durchgeführt, was einen höheren Aufwand erfordert. Zudem ist die Prozesskontrolle des Wärmebehandlungsprozesses zur Überführung in den T6-Zustand bei einem Endlosdraht deutlich einfacher als bei einer Vielzahl von vereinzelten Schrauben 2.

Bezugszeichenliste
- 2: Schraube
- 4: Rohdraht
- 6: Draht
- 8: Rohling
- 10: Kopf
- 12: Schaft
- 14: Gewinde
- 16: Schraubenrohling

- d: Durchmesser
- dₛ: Schaftdurchmesser

- A: Bereitstellung Rohdraht
- B: Ziehoperation
- C: Rekristallisisation
- D: Lösungsglühen
- E: Abschreckung
- F: Auslagerung
- G: Ablängen
- H: Kaltumformprozess
- J: Gewindewalzen

## Patentansprüche

1. Verfahren zur Herstellung eines Befestigungselements, insbesondere einer Schraube (2), bei dem von einem aus einem Rohdraht (4) hergestellten und bereits auf eine hohe Festigkeit ausgehärteten Draht (6) ein Rohling (8) abgetrennt wird, welcher durch anschließende Kaltumformung ohne weitere Wärmebehandlung in die gewünschte Endform gebracht wird.

2. Verfahren nach Anspruch 1, bei dem der Draht (4,6) aus einer aushärtbaren Al-Legierung besteht, insbesondere eine Legierung der 6000er Gruppe und bevorzugt die Al- Legierung 6056.

3. Verfahren nach Anspruch 1 oder 2, bei dem der Draht (6) durch Wärmebehandlung in den hochfesten T6 oder T7x- Zustand überführt ist.

4. Verfahren nach einem der vorhergehenden Ansprüche, bei dem der Draht (6) ein feines Materialgefüge mit einer mittleren Korngröße kleiner als 200 µm, insbesondere kleiner als 100 µm aufweist.

5. Verfahren nach einem der vorhergehenden Ansprüche, bei dem zur Herstellung des Drahts (6) der Durchmesser des Rohdrahts (4) durch mehrfaches Ziehen mit jeweils anschließendem Rekristallisationsglühen verringert wird.

6. Verfahren nach einem der vorhergehenden Ansprüche, bei dem das Befestigungsmittel (2) einen Schaft (12) aufweist, wobei zur Ausbildung des Schafts (12) der Durchmesser (d) des Rohlings (8) entsprechend einem Umformungsgrad im Bereich von 50 - 120 % verringert wird.

7. Verfahren nach Anspruch 6, bei dem der Schaft (12) durch Fließpressen ausgebildet wird.

8. Verfahren nach Anspruch 6 oder 7, bei dem durch einen weiteren Kaltumformvorgang, insbesondere Walzvorgang, auf den Schaft (2) ein Gewinde (14) aufgebracht wird.

9. Befestigungselement mit einem Schaft (10), insbesondere Schraube (2), das bevorzugt nach dem Verfahren nach einem der vorhergehenden Ansprüche hergestellt wurde und das ein Materialgefüge aufweist, welches im Bereich des Schafts (12) sich in Längsrichtung des Schafts (12) erstreckende und durch Kaltumformung erzeugte Längstexturen aufweist.

10. Befestigungselement (2) nach Anspruch 9, bei dem die Längstexturen ein Größenverhältnis Längsausdehnung zu Querausdehnung von > 3 und insbesondere von > 5 und darüber aufweisen.

11. Befestigungselement (2) nach Anspruch 9 oder 10, das aus einer AI-Legierung besteht und eine mittlere Zugfestigkeit Rm im Bereich von 500 bis 600 MPa sowie insbesondere auch eine Dehngrenze Rp 0,2 von 450 bis 550 MPa aufweist.
